# EUROPÄISCHE PATENTSCHRIFT

(11) **EP 0 572 431 B1**
(45) Veröffentlichungstag und Bekanntmachung des Hinweises auf die Patenterteilung: **24.05.1995**
(21) Anmeldenummer: 92903204.3
(22) Anmeldetag: 15.01.1992
(51) Int. Cl.: H02K 15/12, H02K 11/00

(54) **MOTORSTILLSTANDSHEIZUNG**
STANDSTILL HEATING UNIT FOR ELECTRIC MOTOR
CHAUFFAGE A L'ARRET D'UN MOTEUR ELECTRIQUE

(30) Priorität: 23.02.1991 DE 4105733
(43) Veröffentlichungstag der Anmeldung: 08.12.1993
(73) Patentinhaber: KSB Aktiengesellschaft, 67227 Frankenthal (DE)
(72) Erfinder: RUPPRECHT, Peter, D-8580 Bayreuth (DE)
(86) Internationale Anmeldenummer: EP9200068
(87) Internationale Veröffentlichungsnummer: WO9215144

(56) Entgegenhaltungen:
- FR-A- 2 613 150
- US-A- 3 774 096

## Beschreibung

Die Erfindung betrifft eine Stillstandsheizung für einen Spaltrohrmotor zum Antrieb einer Kreiselpumpe, wobei der Spaltrohrmotor während der Heizphase im Stillstand gespeist wird mit einer verringerten, unter der Betriebsspannung liegenden Hilfsspannung, die durch einen über Halbleiter erfolgenden Anschnitt der den Elektromotor versorgenden Stromleitung erzeugt wird.

Durch die FR-A- 2 613 150 ist ein mit Öl gefüllter Elektromotor bekannt, der für einen Betrieb in großer Meerestiefe unter anderem dadurch ertüchtigt wird, daß das Öl auch bei stehendem Motor erwärmt wird. Zu diesem Zweck wird ein Schwachstrom in die Primärwicklung des Motors geschickt, wodurch eine Heizleistung erzeugt wird. Diese Einrichtung benötigt einen Transformator; ihre Heizleistung ist gering, da lediglich Schwachstrom verwendet wird. Würde die Einrichtung in einem Spaltrohrmotor eingesetzt, käme noch die durch das Spaltrohr erfolgende Abschirmung des Rotorraumes gegenüber dem allein geheizten Stator erschwerend hinzu.

Durch die DE-C- 1 056 252 ist auch schon eine Heizvorrichtung bekannt, die die Rotorwicklung zur Erzeugung einer Heizleistung nutzt. Dabei ist der Rotor als Stromverdrängungsläufer mit starker Stromverdrängung derart ausgebildet, daß beim Umschalten auf Stillstand zwei bzw. drei Motorphasen mit einer einphasigen bzw. dreiphasigen, von einem Transformator gelieferten kleineren, unter der Betriebsspannung liegenden Hilfsspannung gespeist werden.

Diese Art der Stillstandsheizung hat den Vorteil, daß sie eine relativ hohe Heizleistung erbringt. Wegen ihrer unmittelbaren Einwirkung auf den Rotorraum ist sie vor allem für Spaltrohrmotoren geeignet. Sie bewirkt, daß im Motorinnern bei Stillstand praktisch die gleichen Ausdehnungs- und Betriebsverhältnisse wie während des Betriebes erhalten bleiben.

Nachteilig bei der vorbekannten Stillstandsheizung ist allerdings der Umstand, daß der hier benötigte Transformator einen relativ hohen Aufwand darstellt, der vor allem bei größeren Motoren stark ins Gewicht fällt.

Der Erfindung liegt die Aufgabe zugrunde, eine Stillstandsheizung zu schaffen, die keinen Transformator benötigt und die auch bei größeren Motoren mit Vorteil einzusetzen ist.

Die gestellte Aufgabe wird, ausgehend von einer Stillstandsheizung der eingangs genannten Art, dadurch gelöst, daß die Hilfsspannung von einem dem sanften Motoranlauf dienenden, mit einer Thyristorsteuerung ausgestatteten Gerät bekannter Ausführung geliefert wird, wobei der Betriebsstrom während der Heizphase so eingestellt ist, daß sich der Rotor des Elektromotors nicht dreht, und wobei die in dem dem Motoranlauf dienenden Betrieb ausgefilterte Blindleistung während der durch das Gerät erfolgenden Heizphase mit genutzt wird.

Die bei der erfindungsgemäßen Stillstandsheizung vorgenommene Art der Erzeugung einer Hilfsspannung ist dem Grundsatz nach bekannt durch elektronische Anlaufsteuerungen für Drehstrommotoren (Prospekt "KTR-Elektronics, Anlaufsteuerungen für Drehstrommotoren" der Firma KTR Kupplungstechnik GmbH, D-4440 Rheine 1). Solche Anlaufsteuerungen finden dort Anwendung, wo der ruckfreie Anlauf einer von einem Drehstrommotor angetriebenen Maschine, eines Förderbandes, eines Schiebetores oder einer ähnlichen Einrichtung für einen störungsfreien Betrieb notwendig ist. Im Gegensatz zur Anlaufsteuerung arbeitet die erfindungsgemäße Stillstandsheizung aber nicht mit einer ein Losbrechen bewirkenden Anlaufspannung und einer Hochlaufzeit eines gesteuerten Elektromotors.

Die erfindungsgemäße Stillstandsheizung ist allerdings in der Lage, ein dem sanften Motoranlauf dienendes Gerät in einer zweiten Anwendung zu nutzen, wobei aber der Betriebsstrom während der Heizphase so einzustellen ist, daß sich der Rotor des Elektromotors nicht dreht.

Als Vorteil kommt noch hinzu, daß die bei der bekannten Anlaufsteuerung ausgefilterte Blindleistung während der durch das Gerät erfolgenden Heizphase mit genutzt wird. Die in der Anlaufphase unerwünschte Blindleistung liefert also hier zusätzliche Heizenergie.

Die erfindungsgemäße Stillstandsheizung fügt sich in bereits bestehende Konzepte ein. Sie kann ohne weiteres bei bereits im Betrieb befindlichen Motoren nachgerüstet werden. So ist sie beispielsweise auch einsetzbar bei thermisch überwachten Normmotoren oder bei thermisch überwachten Spaltrohrmotorpumpen mit Explosionsschutzeinrichtung.

## Patentansprüche

1. Stillstandsheizung für einen Spaltrohrmotor zum Antrieb einer Kreiselpumpe, wobei der Spaltrohrmotor während der Heizphase im Stillstand gespeist wird mit einer verringerten, unter der Betriebsspannung liegenden Hilfsspannung, die durch einen über Halbleiter erfolgenden Anschnitt der den Elektromotor versorgenden Stromleitung erzeugt wird, **dadurch** **gekennzeichnet**, daß die Hilfsspannung von einem dem sanften Motoranlauf dienenden, mit einer Thyristorsteuerung ausgestatteten Gerät bekannter Ausführung geliefert wird, wobei der Betriebsstrom während der Heizphase so eingestellt ist, daß sich der Rotor des Elektromotors nicht dreht, und wobei die in dem dem Motoranlauf dienenden Betrieb ausgefilterte Blindleistung während der durch das Gerät erfolgenden Heizphase mit genutzt wird.

## Claims

1. Standstill heating unit for a canned motor for driving a centrifugal pump, whereby the canned motor, while at standstill during the heating phase, is supplied with a reduced auxiliary voltage that is lower than the normal operating voltage, produced from the current supply to the electric motor by phase angle control using semiconductors, **characterized in** that the auxiliary voltage is supplied from a Thyristor control equipped circuit of known design, employed for smooth start-up, whereby the operating current is so applied during the heating phase, that the rotor of the electric motor does not turn, and whereby the reactive power filtered out during motor start-up is supplememtarily used during the heating phase brought about by the circuit.

## Revendications

1. Chauffage d'arrêt pour un moteur à gaine pour l'entraînement d'une pompe centrifuge dans lequel le moteur à gaine est alimenté à l'arrêt pendant la phase de chauffage avec une tension auxiliaire réduite inférieure à la tension de service laquelle est créée par une prise de la ligne électrique alimentant le moteur électrique par l'intermédiaire de semi-conducteurs **caractérisé** en ce que la tension auxiliaire est fournie par un appareil de construction connue servant au démarrage en douceur du moteur et équipé d'une commande par thyristor et dans lequel le courant de service est réglé de telle manière que le rotor du moteur électrique ne tourne pas et dans lequel la puissance apparente filtrée dans le service servant au démarrage du moteur est utilisée pendant la phase de chauffage produite par l'appareil.
